## Europäisches Patentamt

## European Patent Office

## Office européen des brevets

(11) Numéro de publication: **0 201 406**
**B1**

## FASCICULE DE BREVET EUROPEEN

(45) Date de publication du fascicule du brevet:
**19.07.89**

(21) Numéro de dépôt: **86400906.3**

(22) Date de dépôt: **24.04.86**

(51) Int. Cl.⁴: **F16C 39/06, H05G 1/02**

(54) **Dispositif radiologique à tube radiogène à paliers magnétiques.**

(30) Priorité: **07.05.85 FR 8506963**

(43) Date de publication de la demande:
**17.12.86 Bulletin 86/46**

(45) Mention de la délivrance du brevet:
**19.07.89 Bulletin 89/29**

(84) Etats contractants désignés:
**DE GB IT NL**

(56) Documents cités:
**US-A- 4 107 535**

(73) Titulaire: **GENERAL ELECTRIC CGR S.A., 13, Square Max-Hymans, F-75015 Paris(FR)**

(72) Inventeur: **Gabbay, Emile, THOMSON-CSF SCPI 19, avenue de Messine, F-75008 Paris(FR)**
Inventeur: **Plessis, André, THOMSON-CSF SCPI 19, avenue de Messine, F-75008 Paris(FR)**

(74) Mandataire: **Ballot, Paul Denis Jacques et al, Cabinet Ballot-Schmit 84, avenue Kléber, F-75116 Paris(FR)**

ACTORUM AG

## Description

La présente invention concerne un dispositif radiologique à tube radiogène du type à palier magnétique, applicable au domaine général du radiodiagnostic.

Dans les dispositifs radiologiques ou un rayonnement X est produit à partir de l'anode tournante d'un tube radiogène, cette anode est mise en rotation grâce à un moteur d'entraînement comportant, d'une part, un rotor disposé à l'intérieur du tube radiogène selon l'axe de rotation de l'anode, et comportant d'autre part un stator disposé concentriquement au rotor et à l'extérieur de l'enveloppe du tube radiogène.

La haute tension nécessaire au fonctionnement du tube radiogène, fournie par un générateur haute tension, est amenée jusqu'au tube radiogène par des cables à haut pouvoir d'isolement électrique ; la polarité négative étant appliquée à la cathode du tube radiogène et la polarité positive étant appliquée à l'anode.

D'une manière courante, la polarité négative est référencée à la terre ou masse, ainsi qu'une gaine de protection contenant le tube radiogène. Le cable porteur de la polarité positive pénètre dans cette gaine, dans laquelle il est relié à une broche de connection du tube radiogène, cette broche étant électriquement reliée à l'anode.

Pour les moteurs d'entraînement en rotation de l'anode, dont la suspension du rotor est assurée par des moyens mécaniques, tels que des paliers à roulements à billes, il est courant d'appliquer la polarité positive de la haute tension au rotor, cette polarité positive étant transmise à l'anode tournante grâce à un arbre métallique reliant le rotor et l'anode ; le stator étant alimenté sous une basse tension référencée à la masse. On trouve alors entre le stator et le rotor toute la valeur de la haute tension positive, cette valeur pouvant atteindre des niveaux considérables (85 KV). L'isolation électrique est assurée grâce à un ensemble de diélectriques constitués, notamment par le verre de l'enveloppe du tube radiogène, l'huile d'isolement et un écran isolant, le vide réalisé dans le tube radiogène constituant un isolement supplémentaire. Cet ensemble de diélectriques passe notamment dans l'espace compris entre le stator et le rotor, lequel espace constitue l'entrefer du moteur d'entraînement de l'anode.

Les moteurs d'entraînement du type dont le rotor tourne sur des paliers à roulements à billes, présentent l'inconvénient d'une détérioration relativement rapide due notamment à l'usure méca- nique de ces roulements à billes. Aussi, les constructeurs tendent à remplacer ce type de suspension mécanique par des suspensions du type à paliers magnétiques.

Les paliers magnétiques sont constitués d'un ensemble de stators comportant chacun un certain nombre d'électro-aimants indépendants, parcourus par un courant contrôlé de manière à ce que le rotor se trouve en équilibre sous l'influence des forces électro-magnétiques. Cette position d'équilibre, dite position nominale, est déterminée au moyen de détecteurs qui enregistrent en permanence la position du rotor. Les signaux générés par ces détecteurs permettent de modifier automatiquement le courant traversant les électro-aimants, et par suite, la force des champs magnétiques, grâce à un système d'asservissement électronique auquel chaque électro-aimant et chaque détecteur sont reliés.

Un inconvénient, non négligeable, de l'utilisation des moteurs à paliers magnétiques, réside dans le nombre important de liaisons électriques (quelques dizaines de conducteurs) qui relient l'élec- tronique d'asservissement aux éléments qu'elle commande, ce qui constitue une gêne d'autant plus importante que la gaine contenant le tube radiogène est généralement mobile.

D'autre part, le fonctionnement correct d'un moteur à paliers magnétiques exige que l'entrefer (entre le rotor et le stator) soit très faible, ce qui rend impossible l'isolation électrique entre les stators et le rotor vis à vis de la haute tension. Une solution connue consiste à isoler électriquement le rotor par rapport à l'anode tournante : l'anode tournante étant au pôle positif de la haute tension, elle est mécaniquement solidarisée au rotor, pour sa rotation, par un arbre isolant réalisé par exemple en alumine ; le rotor est alors référencé à la masse ainsi que les stators.

Cette solution au problème d'isolation électrique comporte un grave inconvénient qui réside dans la fragilité mécanique de cet arbre isolant, étant donné les grandes vitesses de rotation et les températures élevées auxquelles cet arbre isolant est soumis.

On connait cependant, par le brevet US-A 4 107 535, un dispositif radiologique à tube radiogène comportant une anode tournante couplée à un rotor entrainé par un station référencée à un même potentiel, à savoir une polarité positive de la haute tension. Dans ce document cependant rien n'est prevu pour ??? la position du rotor par rapport au station.

La présente invention a pour but de ramener la complexité d'alimentation d'un tube radiogène à paliers magnétiques, à la simplicité d'alimentation d'un tube radiogène classique. Ceci est obtenu dans la présente invention par un agencement nouveau, qui permet de diminuer considérablement le nombre de fils attachés à la gaine, à l'extérieur de cette dernière ; cet agencement permet en outre de simplifier les problèmes d'isolation électrique entre le rotor et les stators, tout en conservant, à l'arbre support servant à solidariser le rotor et l'anode tournante, les qualités mécaniques de robustesse nécessaires à un fonctionnement fiable.

Selon l'invention, un dispositif radiologique à tube radiogène à paliers magnétiques, comportant une gaine contenant ledit tube radiogène, ledit tube radiogène comportant une anode tournante couplée mécaniquement à un rotor entraîné en rotation par un stator d'entraînement, ledit rotor étant disposé selon un axe longitudinal et sa suspension étant assurée grâce auxdits paliers magnétiques commandés par des moyens d'asservissement, ledit dispositif radiologique comportant : un générateur haute tension disposé à l'extérieur de ladite gaine et fournissant la haute tension d'alimentation dudit tube radiogène, une première source basse tension disposée à l'extérieur de ladite gaine et alimentant lesdits moyens d'asservissement, une seconde source basse tension disposée à l'extérieur de ladite gaine et alimentant ledit stator d'entraînement ; lesdits moyens d'asservissement générant les tensions nécessaires au fonctionnement de chacun desdits paliers magnétiques, ladite anode tournante étant reliée à la polarité positive de la haute tension par l'intermédiaire d'un câble électrique à haute isolation électrique, est caractérisé en ce que lesdits moyens d'asservissement sont contenus dans ladite gaine et sont reliés à ladite première source basse tension par un premier et un second conducteurs. Un document illustrant l'état de la technique représenté par le préambule de la revendication 1 n'est pas connu.

Un avantage important de cette disposition, est qu'elle permet en outre de supprimer les problèmes d'isolation électrique entre les stators et le rotor, en les reliant à des potentiels sensiblement identiques, tels que la polarité positive de la haute tension, tout en conservant comme dans une installation comportant un tube radio- gène classique, un unique cable à haute isolation électrique porteur de la polarité positive de la haute tension du tube radiogène.

L'invention sera mieux comprise grâce à la description qui suit, faite à titre d'exemple non limitatif, et aux deux figures annexées parmis lesquelles :

- la figure 1 montre de manière schématique une version préférée du dispositif radiologique de l'invention ;
- la figure 2 montre une seconde version de l'invention permettant d'ajuster la position axiale d'un rotor.

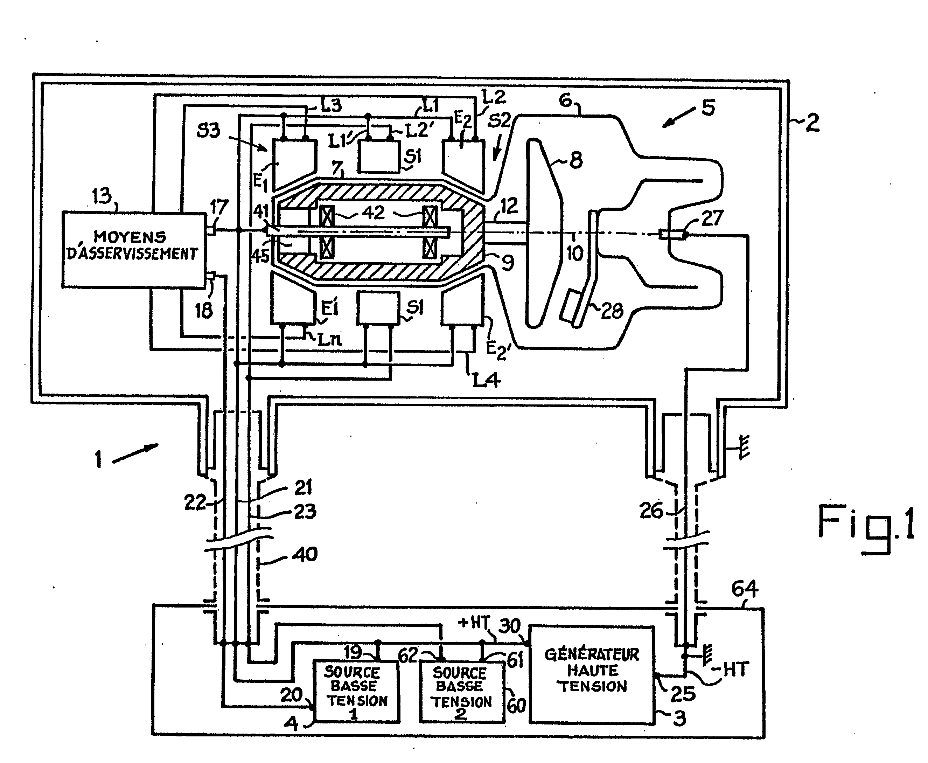

La figure 1 représente schématiquement un dispositif radio- logique 1 conforme à l'invention, comportant notamment une gaine 2 contenant un tube radiogène 5, un générateur haute tension 3 fournissant la haute tension d'alimentation du tube radiogène 5, et une première et une seconde sources basse tension 4, 60.

Le tube radiogène 5 comporte dans une enveloppe 6-7, une anode tournante 8 couplée en rotation à un rotor 9. Le rotor 9 est disposé selon un axe longitudinal 10 autour duquel il entraîne en rotation l'anode tournante 8, à laquelle il est solidarisé par un arbre support 12.

Le rotor 9 coopère pour sa rotation et sa suspension, avec un premier stator S1, servant particulièrement à entraîner sa rotation, et avec des second et troisième stators S2, S3 commandés par des moyens électroniques d'asservissement 13. Les second et troisième stators S2, S3 constituent les paliers magnétiques proprement dit, de type en eux-mêmes connus, servant à assurer la suspension du rotor 9 et dont l'alimentation est assurée par les moyens d'asservissement 13, lesquels sont eux-mêmes alimentés par la première source basse tension 4 ; le premier stator d'entraînement S1 étant alimenté par la seconde source basse tension 60. Dans l'exemple non limitatif décrit, les second et troisième stators constituent des paliers côniques, situés d'un même côté par rapport à l'anode tournante 8 ; l'invention étant également applicable dans le cas de paliers d'un autre type.

Ainsi qu'il a été précédemment expliqué dans le préambule, les second et troisième stators S2, S3 de palier magnétique, comportent chacun des pôles d'électro-aimants ; ces pôles d'électro-aimants étant généralement au nombre de quatre par stator, disposés deux à deux selon des axes radiaux. Dans l'exemple montré sur la figure 1 et pour plus de clarté de celle-ci, les second et troisième stators S2, S3 sont représentés chacun uniquement par deux électro-aimants respectivement E1, E1' et E2, E2', disposés dans le plan de la figure.

L'action des électro-aimants E1, E1', E2, E2', est gérée de manière classique par les moyens électroniques d'asservissement 13, grâce à des informations fournies par des capteurs de position (non représentés) que comporte d'une manière connue chaque électro-aimant.

Ceci conduit à un nombre n très important de liaisons électriques L1, L2, L3, ..., Ln, reliant les moyens électroniques d'asservissement 13 aux second et troisième stators S2, S3 ; ce nombre pouvant atteindre 38 par exemple, en comptant des liaisons L1', L2' nécessaires à l'alimentation du premier stator S1 d'entraînement.

Dans l'art antérieur, ces liaisons L1, ... , Ln sortent de la gaine 2 afin de relier les stators S1, S2, S3 situés dans la gaine 2, au moyen électronique d'asservissement 13 eux-mêmes situés à l'extérieur de cette gaine. Ces liaisons constituent par leur encombrement une gêne importante, qui est augmentée par le fait que la gaine est mobile ; cette dernière condition nécessitant en outre des précautions particulières afin de conserver aux fils leur qualité mécanique.

Dans la présente invention, ces problèmes sont évités par le fait que les moyens électroniques d'asservissement 13 sont disposés dans la gaine 2 elle-même, ce qui permet de limiter les fils sortant de la gaine 2. Les moyens électroniques d'asservissement 13 comportent généralement les moyens (non représentés) nécessaires à élaborer les différentes tensions de fonctionnement, en partant d'une source basse tension, alternative par exemple, représentée par la première source 4. Aussi, les fils sortant de la gaine 2 à cet effet peuvent être limités à deux, ainsi que dans l'exemple décrit où, une première et une seconde entrée d'alimentation 17, 18 des moyens électroniques d'asservissement 13, sont reliées à une première et à une seconde sortie 19, 20 de la source basse tension 4, respectivement par un premier et un second conducteur 21, 22. D'autre part, le premier stator S1 d'entraînement étant référencé à un même potentiel que les paliers magnétiques ou stators S2, S3, il suffit, ainsi que dans l'exemple décrit, d'un troisième conducteur 23 sortant de la gaine 2 pour alimenter le premier stator S1 ; une première liaison L1' propre à ce dernier étant reliée aux autres liaisons L1 communes aux paliers magnétiques S2, S3, et sa seconde liaison L2' étant par l'intermédiaire du troisième conducteur 23 reliée à la seconde source basse tension 60.

Un nouvel avantage important de cette disposition, est qu'elle permet d'apporter une solution particulièrement intéressante aux problèmes posés par l'isolation électrique entre le rotor 9, les stators S1, S2, S3, et l'anode tournante 8.

Dans l'invention, le problème d'isolation électrique est résolu de la manière connue dans le brevet US-A 4 107 535 en portant les stators S1, S2, S3 et le rotor 9 à des potentiels identiques à celui de l'anode tournante 8, c'est-à-dire sensiblement à la polarité positive +HT de la haute tension.

Cette solution est rendue possible dans le dispositif radiologique 1 de l'invention, du fait que les moyens électroniques d'asservissement 13 sont disposés dans la gaine 2.

En effet, en supposant qu'une telle solution ait été envisagée avec un dispositif radiologique selon l'art antérieur, comportant un tube radiogène à paliers magnétiques dont les moyens électroniques d'asservissement sont disposés à l'extérieur de la gaine, il faudrait pour réaliser la mise à la haute tension positive des stators S1, S2, S3, référencer les moyens électroniques d'asservissement 13 à la haute tension positive et réaliser toutes les liaisons L1, L2, ..., Ln à l'aide de câbles à haute isolation électrique. De tels câbles, bien que coûteux, sont couramment utilisés dans l'industrie, mais le nombre de conducteurs qu'ils comportent est limité à trois ou quatre. Il faudrait alors employer au moins dix câbles à haute isolation électrique, afin de traverser l'espace entre les moyens électroniques d'asservissement et la gaine. Il est évident qu'une telle solution n'est pas envisageable tant du point de vue de l'utilisation, que du coût et même de la faisabilité, du fait notamment que chaque câble à haute isolation électrique exige, pour sa connexion à la gaine, des moyens de connexion particulièrement encombrants.

Au contraire, dans le dispositif radiologique 1 de l'invention, la mise à la haute tension positive +HT des stators S1, S2, S3 est réalisée à l'aide d'un unique câble à haute isolation électrique 40 d'un type classique, montré en traits pointillés, comportant trois conducteurs 21, 22, 23.

La haute tension de l'alimentation du tube radiogène est fournie par le générateur haute tension 3, dont une première borne de sortie 25 délivre la polarité négative -HT. La première borne de sortie 25 est reliée, par l'intermédiaire d'un quatrième conducteur 26 et d'un passage étanche 27 monté sur le tube radiogène 5, à la cathode 28 de ce dernier ; la gaine 2 étant, dans l'exemple non limitatif décrit, reliée à la première borne de sortie 25, c'est-à-dire au -HT et à la masse. La polarité positive de la haute tension +HT est délivrée par une seconde borne 30 du générateur haute tension 3.

Dans l'exemple non limitatif représenté, cette seconde borne 30, c'est-à-dire la polarité positive +HT est reliée à la première sortie 19 de la première source basse tension 4 et à une troisième sortie 61 de la seconde source 60, de manière à référencer ces sources basse tension 4, 60 au potentiel positif +HT de la haute tension. Ainsi, les premier, second et troisième conducteurs 21, 22, 23 sont contenus dans le câble 40 à haut isolement électrique, et permettent d'alimenter les moyens d'asservissement 13 avec les premier et second conducteurs 21, 22, et d'alimenter le stator d'entraînement S1 avec les premier et troisième conducteurs 21, 23 ; le troisième conducteur 23 étant relié à une quatrième sortie 62 appartenant à la seconde source basse tension 60. Il est à remarquer que le premier conducteur 21 est commun à ces deux alimentations, et qu'en outre il transporte la polarité positive +HT de la haute tension.

Cette configuration permet, ainsi que dans l'exemple décrit, d'incorporer le générateur haute tension 3, la première et la seconde source 4, 60 dans une même cuve isolée 64.

Dans l'exemple non limitatif décrit, le rotor 9 est creux, et tourne autour d'un arbre fixe 41 muni de deux roulements de garde 42 sur lesquels le rotor 9 vient en appui, quand il n'est pas maintenu en équilibre sous l'action des second et troisième stators S2, S3. Dans l'exemple non limitatif décrit, la polarité positive +HT de la haute tension, transportée par le premier conducteur 21, est reliée à l'arbre fixe 41 pour alimenter le tube radiogène 5. Cette polarité positive +HT est ensuite transmise au rotor 9, par l'intermédiaire d'un dispositif de transmission 45 d'un type classique, tel que comportant par exemple des moyens de contact par frottement (non représentés), ou des moyens pour générer un faisceau d'électrons.

Le rotor 9 étant à la polarité positive +HT de la haute tension, ou à une tension très voisine de celle-ci du fait d'une éventuelle chute de tension dûe au dispositif de transmission 45, cette haute tension positive +HT est transmise à l'anode 8 par l'arbre support 12, ce dernier étant métallique.

Les paliers magnétiques ou stators S2, S3 étant commandés par les moyens électroniques d'asservissement 13, ils sont, de la même manière que ces derniers, portés au potentiel positif +HT de la haute tension ou à un potentiel voisin. Aussi, pour plus de clarté de la figure les liaisons L1, L1' représentant l'une des liaisons des électro-aimants E1, E1', E2, E2' et du stator d'entraînement S1, sont directement reliées à la première borne d'entrée 17 des moyens électroniques d'asservissement 13, c'est-à-dire au premier conducteur 21 et à l'arbre fixe 41.

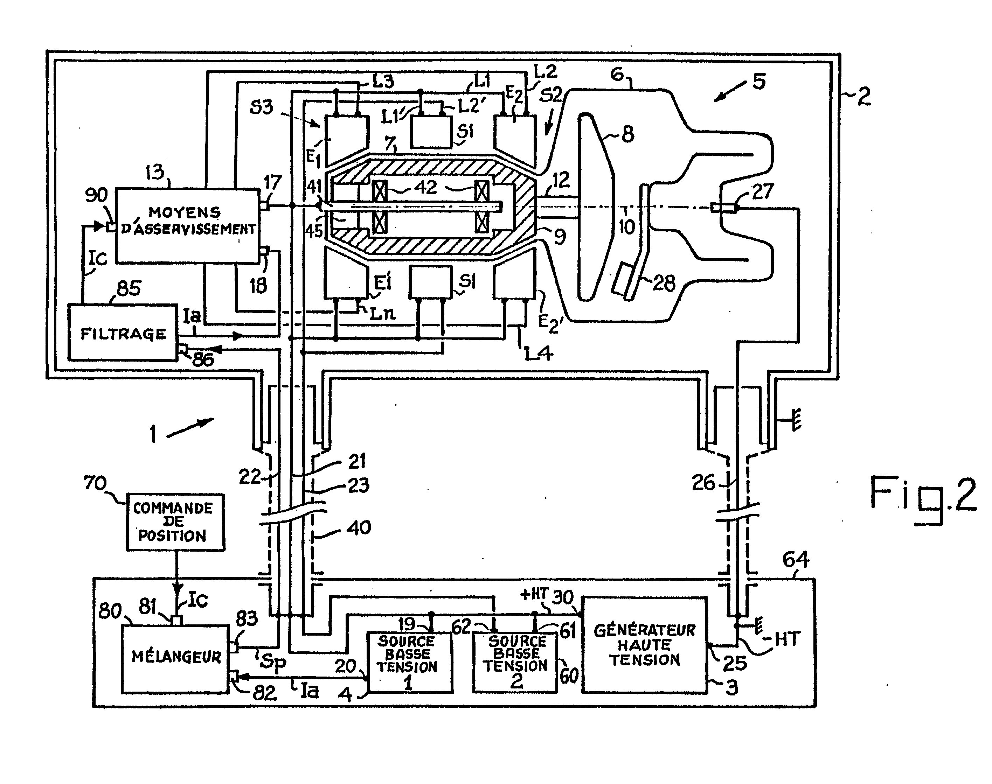

La figure 2 montre une variante de l'invention comportant des moyens de commande supplémentaires, permettant de commander ou asservir la position du rotor 9, selon l'axe longitudinal 10 par rapport à une valeur de consigne créee à l'extérieur de la gaine 2, et à un potentiel proche de celui de la masse.

Ainsi qu'il a été précédemment expliqué, il est souhaitable de ne pas augmenter, dans une installation radiologique, la quantité de câbles électriques tels que le câble électrique 40, tout en conservant à ce dernier un nombre de conducteurs 21, 22, 23, limité à trois ou quatre (le quatrième conducteur n'étant pas représenté).

Les moyens d'asservissement 13 comportent, d'une manière classique, une entrée de commande extérieure 90, permettant le pilotage de la position axiale du rotor 9.

L'entrée de commande extérieure 90 peut être reliée à un dispositif de commande de position 70 soit d'une manière directe (non représentée), grâce au quatrième conducteur par exemple si le câble 40 en comporte quatre, soit par l'intermédiaire du troisième conducteur 23 ou du second conducteur 22, en utilisant en outre un dispositif mélangeur 80 et un dispositif de filtrage 85 ; cette dernière solution permettant de conserver un câble électrique 40 à trois conducteurs 21, 22, 23, ainsi que dans l'exemple décrit ou c'est le second conducteur 22 qui est utilisé à cet effet.

Dans l'exemple non limitatif décrit, la solution consiste à superposer, à un courant d'alimentation la correspondant à l'alimentation des moyens d'asservissement 13, un courant de consigne lc généré par le dispositif de commande 70 et ayant une fréquence différente de la fréquence du courant d'alimentation la.

A cette fin, le dispositif de commande de position 70 délivre le courant de consigne lc qui est appliqué à une première entrée de mélange 81 du dispositif mélangeur 80, auquel est appliqué, à une seconde entrée de mélange 82, le courant d'alimentation la délivré par la seconde sortie 20 de la première source basse tension 4 ; le dispositif mélangeur 80 étant, dans l'exemple non limitatif décrit, disposé dans la cuve isolante 64, et étant constitué de manière classique pour superposer les deux courants la, lc et présenter les caractéristiques d'isolation électrique compatibles entre la haute tension positive et la masse.

Le dispositif mélangeur 80 délivre, par une sortie 83, le signal de superposition SP qui est transmis jusque dans la gaine 2 par le second conducteur 22, et qui est appliqué à une entrée 86 du dispositif de filtrage 85 disposé dans la gaine 2. Le dispositif de filtrage 85 sépare, d'une manière classique, le courant de consigne lc qui est appliqué à l'entrée de commande extérieure 90, et le courant d'alimentation la qui est appliqué à la seconde entrée 18 des moyens d'asservissement 13. Une telle combinaison peut être reproduite pour transmettre dans le tube radiogène 5, de manière éventuellement simultanée, d'autres signaux électriques (non représentés) en utilisant un ou plusieurs des conducteurs 22, 23 autres que le conducteur commun, lequel est constitué dans l'exemple décrit par le premier conducteur 21.

Cette description constitue un exemple non limitatif d'un dispositif radiologique 1 selon l'invention, dans lequel l'alimentation électrique d'un tube radiogène à paliers magnétiques est considérablement simplifiée, en disposant dans la gaine 2 contenant le tube radiogène 5, les moyens électroniques d'asservissement 13 destinés à commander les paliers magnétiques. Cette première simplification s'accompagnant d'une autre simplification importante des problèmes d'isolation électrique posés par l'utilisation des paliers magnétiques, tout en conservant, entre le rotor 9 et l'anode tournante 8, un arbre support métallique 12 ayant des qualités de robustesse appropriées à un fonctionnement fiable.

**Revendications**

1. Dispositif radiologique à tube radiogène à paliers magné- tiques, comportant une gaine (2) contenant ledit tube radiogène (5), ledit tube radiogène (5) comportant une anode tournante (8) couplée mécaniquement à un rotor (9) entraîné en rotation par un stator d'entraînement (S1), ledit rotor (9) étant disposé selon un axe longitudinal (10) et sa suspension étant assurée grâce auxdits paliers magnétiques (S2, S3) commandés par des moyens d'asservissements (13), ledit dispositif radiologique (1) comportant : un générateur haute tension (3) disposé à l'extérieur de ladite gaine (2) et four- nissant la haute tension d'alimentation dudit tube radiogène (5), une première source basse tension (4) disposée à l'extérieur de ladite gaine (2) et alimentant lesdits moyens d'asservissement (13), une seconde source basse tension (60) disposée à l'extérieur de ladite gaine (2) et alimentant ledit stator d'entraînement (S1) ; lesdits moyens d'asservissement (13) générant les tensions nécessaires au fonctionnement de chacun desdits paliers magnétiques (S2, S3), ladite anode tournante (8) étant reliée à la polarité positive (+HT) de la haute tension par l'intermédiaire d'un câble électrique (40) à haute isolation électrique, caractérisé en ce que lesdits moyens d'asservissement (13) sont contenus dans ladite gaine (2) et sont reliés à ladite première source basse tension (4) par un premier et un second conducteurs (21, 22).

2. Dispositif radiologique selon la revendication 1, caractérisé en ce que ledit stator d'entraînement (S1) est référencé à un même potentiel que lesdits paliers magnétiques (S2, S3) et en ce qu'il est relié à ladite seconde source basse tension (60) par ledit premier conducteur (21), et par un troisième conducteur (23), ledit premier conducteur (21) étant commun aux alimentations desdits moyens d'asservissement (13) et dudit stator d'entraînement (S1).

3. Dispositif radiologique selon la revendication 2, caractérisé en ce que ledit premier conducteur (21) est relié en outre à la polarité positive (+HT) de la haute tension, de manière à référencer lesdits moyens électroniques d'asservissement (13), lesdits paliers magnétiques (S2, S3) et ledit stator d'entraînement (S1) à cette polarité positive (+HT).

4. Dispositif radiologique selon la revendication 2, caractérisé en ce que les premier, second et troisième conducteur (21, 22, 23) sont contenus dans ledit câble (40) à haute isolation électrique, et en ce que le premier conducteur (21) est relié à une sortie (30) du générateur haute tension (3) délivrant la polarité positive (+HT) et constitue un conducteur commun aux alimentations en basse tension desdits moyens électroniques d'asservissement (13) et dudit stator d'entraînement (S1) et à l'application de la polarité positive (+HT) de la haute tension sur ladite anode tournante (8).

5. Dispositif radiologique selon l'une des revendications précédentes, caractérisé en ce que ladite anode tournante (8) est couplée en rotation audit rotor (9) par un arbre support (12) métallique.

6. Dispositif radiologique selon la revendication 5, caractérisé en ce que ladite anode tournante (8) est reliée à ladite polarité positive (+HT), par l'intermédiaire dudit rotor (9) et dudit arbre support métallique (12).

7. Dispositif radiologique selon l'une des revendications précédentes, caractérisé en ce que ledit générateur haute tension (3) et lesdites sources basse tension (4, 60) sont disposés dans une même cuve isolante (64).

8. Dispositif radiologique selon l'une des revendications précédentes, caractérisé en ce que ledit câble électrique (40) à haute isolation électrique comporte un nombre de conducteurs (21, 22, 23) inférieur ou égal à quatre.

9. Dispositif radiologique selon la revendication 8, caractérisé en ce qu'il comporte en outre un dispositif de commande de position axiale (70), générant un courant de consigne (Ic) destiné à commander la position dudit rotor (9) selon ledit axe longitudinal (10), ledit courant de consigne (Ic) étant appliqué à une entrée de commande extérieure (90) que comportent les moyens d'asservissement (13), par l'intermédiaire dudit câble électrique (40) à haute isolation électrique.

10. Dispositif radiologique selon la revendication précédente, caractérisé en ce qu'il comporte en outre un dispositif mélangeur (80) relié d'une part audit dispositif de commande (70) et recevant ledit courant de consigne (Ic), et relié d'autre part à la première source basse tension (4) pour recevoir un courant d'alimentation (Ia) correspondant à l'alimentation desdits moyens d'asservissement (13), lesdits courant de consigne et d'alimentation (Ic, Ia) ayant des fréquences différentes, ledit dispositif mélangeur (80) fournissant un signal de superposition (Sp) transmis jusque dans ladite gaine (2) par ledit second conducteur (22), ledit signal de superposition (Sp) étant appliqué à un dispositif de filtrage (85) séparant ledit courant de consigne (Ic) dudit courant d'alimentation (Ia).

## Claims

1. A radiological device with a radiogenic tube having magnetic bearings, comprising a sheath (2) containing the said radiogenic tube (5), the said radiogenic tube (5) being made up of a rotary anode (8) mechanically coupled with a rotor (9) caused to rotate by a driving stator (S1), the said rotor (9) being aligned with a longitudinal axis (10) and its suspension being effected by means of these magnetic bearings (S2 and S3) operated by means of position correction means (13), the said radiological device (1) comprising: a high tension generator (3) placed outside the said sheath (2) and supplying a feed high tension for the supply of the said radiogenic tube (5), a first low tension source (4) placed outside the said sheath (2) and feeding the said position correction means (13), a second low tension source (60) placed outside the said sheath (2) and feeding the said driving stator (S1); the said position correction means (13) generating the voltages necessary for the operation of each of the said magnetic bearings (S2 and S3), the said rotary anode (8) being connected with the positive pole (+HT) of the high tension by the intermediary of an electric cable (40) with a high electric insulating effect, characterized in that the said position correcting means (13) are contained in the said sheath (2) and are connected with the said low tension source (4) by a first and by a second conductor (21 and 22).

2. The radiological device as claimed in claim 1, characterized in that the said driving stator (S1) is referenced at the same potential as the magnetic bearings (S2 and S3) and in that it is connected with the said second low tension source (60) by the said first conductor (21) and by the a third conductor (23), the said conductor (21) being common to the feed means of the said position correcting means (13) and of the said driving stator (S1).

3. The radiological device as claimed in claim 2, characterized in that the said first conductor (21) is furthermore connected with the positive pole (+HT) of the high tension in such a manner as to reference the said electronic position correcting means (13), the said magnetic bearings (S2 and S3) and the said driving stator (S1) at this positive polarity (+HT).

4. The radiological device as claimed in claim 2, characterized in that the first, the second, and the third conductors (21, 22 and 23) are contained in the said cable (40) with a high electrical insulating effect, and in that the first conductor (21) is connected with one output (30) of the high tension generator (3) supplying the positive polarity (+HT) and constitutes a conductor common to the low tension feed means of the said electronic position correcting means (13) and of the said driving stator (S1) and to the application of the positive polarity (+HT) of the high tension to the said rotary anode (8).

5. The radiological device as claimed in any one of the preceding claims, characterized in that the said rotary anode (8) is coupled in a rotation transmitting manner with the said rotor (9) by a metallic support shaft (12).

6. The radiological device as claimed in claim 5, characterized in that the said rotary anode (8) is connected with the said positive pole (+HT) by the intermediary of the said rotor (9) and of the said metallic support shaft (12).

7. The radiological device as claimed in any one of the preceding claims, characterized in that the said high tension generator (3) and the said low tension sources (4 and 60) are placed in a common insulating box (64).

8. The radiological device as claimed in any one of the Preceding claims, characterized in that the said electric cable (40) with a high electrical insulating effect comprises a number of conductors (21, 22 and 23) equal to or less than four.

9. The radiological device as claimed in claim 8, characterized in that it comprises furthermore an axial position control device (70) generating a duty current (Ic) intended to control the position of the rotor (9) along the said longitudinal axis (10), said duty current (Ic) being applied to an external control input (90) which comprise the position correction means (13), by the intermediary of the said electrical cable (40) with a high electrical insulating effect.

10. The radiological device as claimed in the preceding claim, characterized in that it furthermore comprises a mixing device (80) connected on the one hand with the said control device (70) and receiving the said duty current (Ic) and on the other hand connected with the first low tension source (4) in order to receive a feed current (Ia) corresponding to the feed of the said position correction means (13), the said duty and feed currents (Ic and Ia) being at different frequencies, the said mixing device (80) supplying a superposition signal (Sp) transmitted as far as the said sheath (2) by the said conductor (22), the said superposition signal (Sp) being applied to a filtering device (85) separating the said duty current (1c) from the said feed current (1a).

## Patentansprüche

1. Radiologische Vorrichtung mit einer magnetische Lager aufweisenden Röntgenröhre, mit einer Hülle (2), welche diese Röntgenröhre (5) enthält, welche eine Drehanode (8) aufweist, die mechanisch an einen Rotor (9) angekoppelt ist, der über einen Antriebsstator (S1) in Drehung versetzt wird, wobei dieser Rotor (9) entlang einer Längsachse (10) angeordnet ist und seine Aufhängung durch die magnetischen Lager (S2, S3) gewährleistet wird, die durch Regelmittel (13) gesteuert werden, wobei diese radiologische Vorrichtung (1) umfaßt: einen Hochspannungsgenerator (3), der außerhalb der Hülle (2) angeordnet ist und die Versorgungshochspannung für die Röntgenröhre (5) liefert, eine erste Niederspannungsquelle (4), welche außerhalb der Hülle (2) angeordnet ist und die Regelmittel (13) speist, eine zweite Niederspannungsquelle (60), die außerhalb der Hülle (2) angeordnet ist und den Antriebsstator (S1) speist; wobei die Regelmittel (13) die Spannungen liefern, welche für die Funktion jedes der magnetischen Lager (S2, S3) benötigt werden, und wobei die Drehanode (8) mit dem positiven Pol (+HT) der Hochspannung über ein elektrisches Kabel (40) von hoher elektrischer Isolierung verbunden ist, dadurch gekennzeichnet, daß die Regelmittel (13) in der Hülle (2) enthalten und mit der ersten Niederspannungsquelle (4) über zwei Leiter (21, 22) verbunden sind.

2. Radiologische Vorrichtung nach Anspruch 1, dadurch gekennzeichnet, daß der Antriebsstator (S1) auf dasselbe Referenzpotential wie die magnetischen Lager (S2, S3) gelegt ist und daß er mit der zweiten Niederspannungsquelle (60) über einen ersten der zwei Leiter (21) sowie über einen dritten Leiter (23) verbunden ist, wobei der erste Leiter (21) gemeinsam für die Versorgung der Regelmittel (13) und des Antriebsstators (S1) benutzt wird.

3. Radiologische Vorrichtung nach Anspruch 2, dadurch gekennzeichnet, daß der erste Leiter (21) ferner mit dem positiven Pol (+HT) der Hochspannung verbunden ist, so daß die elektronischen Regelmittel (13), die magnetischen Lager (S2, S3) und der Antriebsstator (S1) auf das diesem positiven Pol (+HT) entsprechende Referenzpotential gelegt sind.

4. Radiologische Vorrichtung nach Anspruch 2, dadurch gekennzeichnet, daß der erste, der zweite und der dritte Leiter (21, 22, 23) in dem genannten Kabel (40) von hoher elektrischer Isolierung enthalten sind und daß der erste Leiter (21) mit einem Ausgang (30) des Hochspannungsgenerators (3) verbunden ist, welcher den positiven Pol (+HT) führt, und einen Leiter bildet, welcher gemeinsam für die Versorgung der elektronischen Regelmittel (13) mit Niederspannung und die Versorgung des Antriebsstators (S1) sowie für das Anlegen des positiven Pols (+HT) der Hochspannung an die Drehanode (8) verwendet wird.

5. Radiologische Vorrichtung nach einem der vorstehenden Ansprüche, dadurch gekennzeichnet, daß die Drehanode (8) über eine metallische Lagerwelle (12) drehfest mit dem Rotor (9) gekoppelt ist.

6. Radiologische Vorrichtung nach Anspruch 5, dadurch gekennzeichnet, daß die Drehanode (8) mit dem positiven Pol (+HT) über den Rotor (9) und die metallische Lagerwelle (12) verbunden ist.

7. Radiologische Vorrichtung nach einem der vorstehenden Ansprüche, dadurch gekennzeichnet, daß der Hochspannungsgenerator (3) und die Niederspannungsquellen (4, 60) in einer selben Isolierwanne (64) angeordnet sind.

8. Radiologische Vorrichtung nach einem der vorstehenden Ansprüche, dadurch gekennzeichnet, daß das elektrische Kabel (40) von hoher elektrischer Isolierung eine Anzahl von Leitern (21, 22, 23) enthält, die kleiner als oder gleich vier ist.

9. Radiologische Vorrichtung nach Anspruch 8, dadurch gekennzeichnet, daß sie ferner eine Steuervorrichtung zur Steuerung der Axialposition (70) umfaßt, die einen Sollwert-Strom (lc) erzeugt, der dazu bestimmt ist, die Position des Rotors (9) entlang der Längsachse (10) zu steuern, wobei der Sollwert-Strom (lc) an einen externen Steuereingang (90) angelegt wird, mit dem die Regelmittel (13) versehen sind, und zwar über das elektrische Kabel (40) von hoher elektrischer Isolierung.

10. Radiologische Vorrichtung nach dem vorstehenden Anspruch, dadurch gekennzeichnet, daß sie ferner eine Mischvorrichtung (80) umfaßt, die einerseits mit der Steuervorrichtung (70) verbunden ist und den Sollwert-Strom (lc) empfängt, und andererseits mit der ersten Niederspannungsquelle (4) verbunden ist, um einen Versorgungsstrom (la) zu empfangen, welcher der Stromversorgung der Regelmittel (13) entspricht, wobei der Sollwert-Strom und der Versorgungsstrom (lc, la) verschiedene Frequenzen aufweisen, die Mischvorrichtung (80) ein Überlagerungssignal (Sp) liefert, das bis in die Hülle (2) über den zweiten Leiter (22) übertragen wird, und das Überlagerungssignal (Sp) an eine Filtervorrichtung (85) angelegt wird, welche den Sollwert-Strom (lc) von dem Versorgungsstrom (la) trennt.

Fig.1

MOYENS D'ASSERVISSEMENT

GÉNÉRATEUR HAUTE TENSION

SOURCE BASSE TENSION 1

SOURCE BASSE TENSION 2

Fig.2

EP 0 201 406 B1